# EUROPÄISCHE PATENTSCHRIFT

(11) **EP 2 995 824 B1**
(45) Veröffentlichungstag und Bekanntmachung des Hinweises auf die Patenterteilung: **04.07.2018**
(21) Anmeldenummer: 15180800.3
(22) Anmeldetag: 12.08.2015
(51) Int. Cl.: F16B 5/02

(54) **VORRICHTUNG ZUR JUSTIERUNG DER LAGE EINES ERSTEN BEWEGLICHEN BAUTEILS RELATIV ZU EINEM ZWEITEN FESTSTEHENDEN BAUTEIL**
DEVICE FOR ADJUSTING THE POSITION OF A FIRST MOVABLE COMPONENT RELATIVE TO A SECOND FIXED COMPONENT
DISPOSITIF D'AJUSTEMENT DE LA POSITION D'UN PREMIER COMPOSANT MOBILE PAR RAPPORT A UN SECOND COMPOSANT FIXE

(30) Priorität: 09.09.2014 DE 202014007350 U
(43) Veröffentlichungstag der Anmeldung: 16.03.2016
(73) Patentinhaber: casim Gesellschaft für rechnerunterstützte Produktentwicklung und Prozeßmanagement mbH & Co. Dienstleistungs-KG, 34123 Kassel (DE)
(72) Erfinder: Mannewitz, Frank, 34260 Kaufungen (DE); Freitag, Dietmar, 34132 Kassel (DE)
(74) Vertreter: Patentanwälte Walther Hinz Bayer PartGmbB

(56) Entgegenhaltungen:
- EP-A1- 1 110 847
- DE-A1-102012 011 048
- DE-U1-202005 013 345

## Beschreibung

Die Erfindung betrifft eine Justierungsvorrichtung zur Justierung der Lage eines ersten beweglichen Bauteils relativ zu einem zweiten feststehenden Bauteil gemäß dem Oberbegriff des Anspruches 1.

Insbesondere bei der Fertigung von Fahrzeugen kommt es auf die Einhaltung des sogenannten Spaltmaßes an. Unter dem Spaltmaß versteht man den Abstand zwischen z. B. zwei Bauteilen im montierten Zustand. Als Beispiel sei hier genannt der Abstand zwischen beispielsweise dem Scheinwerfer einerseits und dem Kotflügel andererseits, und weiterhin ggf. der Motorhaube. Das heißt, dass das Spaltmaß sowohl zwischen dem Scheinwerfer und der Motorhaube, als auch zwischen dem Scheinwerfer und dem Kotflügel gleich sein soll. Das Spaltmaß soll allerdings nicht nur gleich, sondern auch möglichst gering sein.

Dies stellt die Montage vor erhebliche Probleme, wenn das Spaltmaß, wie oben beschrieben, manuell eingestellt werden muss.

Aus der DE 20 2005 013 345 U1 ist ein Verstell- und Ausgleichselement der eingangs genannten Art bekannt, bei dem durch zwei auf einer Achse fest angeordnete Exzenterscheiben zwei Bauteile mit Keilflächen relativ zueinander verschieblich sind. Nachteilig hierbei ist, dass, da die Exzenterscheiben fest auf der Achse angeordnet sind, eine Zwangskopplung in der Bewegung des mit den Exzenterscheiben verbundenen Bauteils erfolgt.

Die der Erfindung zugrunde liegende Aufgabe besteht darin, diesem Nachteil abzuhelfen. Insbesondere besteht die Aufgabe darin, eine einfache Verschiebung zweier Bauteile relativ zueinander vorzunehmen, um auf diese Weise das Spaltmaß einerseits zu minimieren, und andererseits zwischen den einzelnen Bauteilen gleich auszubilden. Das heißt, es soll insbesondere jeder Punkt einer Ebene durch die Exzentereinheiten gesondert für sich angesteuert werden können.

Zur Lösung der Aufgabe wird erfindungsgemäß bei einer Justierungsvorrichtung gemäß dem Oberbegriff des Anspruchs 1 vorgeschlagen, die Exzentereinheiten in ihrer Bewegung zu entkoppeln, wobei die Bewegung eines beweglichen Bauteils in X- und Y-Richtung jeweils gesondert erfolgt. Bei der gefundenen Lösung ist völlig gleich, was als feststehendes und was als bewegliches Bauteil tituliert ist. Wesentlich ist ausschließlich, dass bei einer Justierung zweier Bauteile relativ zueinander zumindest ein Bauteil bei dem Vorgang der Justierung feststehend ist, um durch die Justierung die Position des anderen beweglichen Bauteils festlegen zu können. Hierdurch wird auch erreicht, dass eine Verschiebung des ersten beweglichen Bauteils relativ zu dem zweiten festen Bauteil nicht nur in einer Raumachse erfolgen kann, sondern in zwei Raumachsen in einer Ebene. Wenn die Exzentereinheiten in ihrer Bewegung entkoppelt sind, bedeutet dies, dass die Exzentereinheiten jeweils gesondert für sich in X- und Y-Richtung verschieblich sind. Dies hat den Vorteil, dass quasi jeder Punkt der Ebene gesondert für sich angesteuert werden kann. Dies erleichtert die Anwendung. Dies ganz im Gegensatz zu der Lehre der DE 10 2012 011 048 A1, die eine Scharniervorrichtung zum Gegenstand hat. Die Scharniervorrichtung zeigt einen Schwenkeinsatz mit einer Schwenklagereinrichtung. Hierbei ist für die Justierung eine Justiereinrichtung in X- und X-Richtung vorgesehen, die einen Doppelexzenter aufweist. Der Doppelexzenter besitzt zwei zueinander verschwenkbare Exzenterhülsen, die derart ineinander gelagert sind, dass die Schwenklagereinrichtung in der X- und Y-Ebene relativ zu dem Schwenkeinsatz durch den Doppelexzenter verschieblich ist. Nachteilig hierbei ist, dass die Bewegung in X- und Y-Richtung gekoppelt, dass heißt, überlappend, ist. Somit sind getrennte Bewegungsabläufe in X- oder Y-Richtung nicht möglich.

Vorteilhafte Merkmale, Ausgestaltungen und Ausführungsformen der Erfindung ergeben sich aus den Unteransprüchen.

Eine jede der Exzentereinheiten weist bevorzugt mindestens eine Kulisse zur drehbaren Aufnahme mindestens eines Exzentergliedes mit einem scheibenartigen Führungsglied auf. Die Kulisse besitzt hierzu eine Aussparung, wobei die Aussparung in Schubrichtung mindestens zwei im Wesentlichen parallel zueinander verlaufende Seitenwandungen aufweist, on denen das Führungsglied wechselweise mitgenommen wird. Das scheibenartige Führungsglied weist hierbei einen exzentrisch auf dem scheibenartigen Führungsglied angeordneten Dom auf, sodass sich das zuvor genannte Exzenterglied ergibt.

Nach einem weiteren bevorzugten Merkmal der Erfindung ist vorgesehen, dass die beiden Kulissen in lediglich einer Raumachse relativ zueinander verschieblich miteinander in Verbindung stehen, wobei hierzu die beiden Kulissen durch eine Nut- und Federverbindung miteinander verbunden sind.

In Bezug auf die Ausgestaltung der Exzentereinrichtung mit den beiden Exzentereinheiten ist festzuhalten, dass das in der ersten Aussparung der ersten unteren Kulisse geführte erste scheibenartige Führungsglied den einen ersten Dom aufweist, und das in der zweiten Aussparung der zweiten oberen Kulisse geführte zweite scheibenartige Führungsglied einen zweiten Dom. Hierbei durchragt der erste Dom den zweiten Dom, wobei die beiden Dome relativ zueinander verdrehbar ineinander lagern; die beiden Dome stehen durch eine entsprechende Öffnung in dem ersten beweglichen Bauteil mit dem ersten beweglichen Bauteil in Verbindung. Hieraus wird deutlich, dass die beiden scheibenartigen Führungsglieder ineinander geführt sind, und zwar dadurch, dass der erste Dom den zweiten Dom durchragt, und dass darüber hinaus die beiden Führungsglieder jeweils in der entsprechenden Aussparung der jeweiligen Kulisse geführt sind. In Verbindung mit der Tatsache, dass die beiden Kulissen durch eine Nut- und Federverbindung in einer Raumachse relativ zueinander verschieblich gelagert sind, wird hieraus deutlich, dass das erste Führungsglied durch die Lagerung in der Aussparung der unteren Kulisse für eine Verschiebung der darüber befindlichen Kulisse in eine Raumachse sorgt, z. B. die X-Achse. Das zweite scheibenartige Führungsglied ist in der Aussparung der zweiten oberen Kulisse geführt, wobei darüber hinaus die beiden scheibenartigen Führungsglieder durch die beiden Dome miteinander verbunden sind, sodass das obere Führungsglied für die Verschiebung des ersten beweglichen Bauteils in Y-Richtung sorgt. Die Bewegung des beweglichen Bauteils in X- und Y-Richtung erfolgt somit jeweils gesondert, dass heißt, die Bewegungen sind zueinander entkoppelt und überlagern sich nicht.

Das heißt weiterhin, dass durch die relative Verschieblichkeit der Kulissen zueinander in Form der Zwangsführung durch die Nut- und Federverbindung das erste bewegliche Bauteil, beispielsweise in die X-Richtung verschieblich ist, und durch das zweite scheibenartige Führungsglied in Verbindung mit der zweiten über der ersten Kulisse befindlichen Kulisse die Verschiebung des ersten beweglichen Bauteils z. B. in Y-Richtung erfolgt, sodass sämtliche Punkte in einer Ebene angefahren werden können, dass heißt, dass das erste bewegliche Bauteil auf relativ einfache Art und Weise gesondert sowohl in X- als auch in Y-Richtung verschieblich ist, was die Justierung erleichtert.

In Bezug auf die scheibenartigen Führungsglieder in den Aussparungen der beiden Kulissen sind nun zwei Ausführungsformen vorgesehen.

Nach einer ersten Ausführungsform ist das scheibenartige Führungsglied nach Art einer kreisrunden Scheibe ausgebildet, wobei der Dom exzentrisch auf der kreisrunden Scheibe angeordnet ist. Hierbei ist vorgesehen, dass die Aussparung in der jeweiligen Kulisse zur Aufnahme der kreisrunden Scheibe des scheibenartigen Führungsgliedes als Teil des Exzentergliedes zwei in Schubrichtung einander gegenüberliegende gerade verlaufende Wandungen aufweist, wobei der Abstand zwischen den beiden abgeflachten Seitenwandungen in etwa dem Durchmesser der kreisrunden Scheibe entspricht. Hieraus wird deutlich, dass beide Kulissen und beide scheibenartigen Führungsglieder jeweils im Wesentlichen gleich ausgebildet sind. In Bezug auf die Verschiebung des ersten beweglichen Bauteils relativ zu dem zweiten festen Bauteil besteht zwischen dem Drehwinkel der kreisrunden Scheibe und dem daraus folgenden translatorischen Anteil der Führungsglieder in den Aussparungen der Kulissen keine Proportionalität zwischen Drehwinkel und translatorischen Anteil. Das heißt, das Verhältnis zwischen Drehwinkel und translatorischem Anteil ähnelt eher einer Sinusfunktion.

Nun ist allerdings nach einer weiteren Ausführungsform vorgesehen, dass das scheibenartige Führungsglied als Mehrbogengleichdick, insbesondere als Dreibogengleichdick ausgebildet ist, wobei der Dom exzentrisch auf dem Dreibogengleichdick angeordnet ist. Bei Verwendung eines solchen Dreibogengleichdickes für das jeweilige scheibenartige Führungselement ergibt sich tatsächlich eine Proportionalität zwischen dem rotatorischen Anteil und dem sich daraus ergebenden translatorischen Bewegungsanteil. Für die Aussparung in der jeweiligen Kulisse ist für ein solches Mehrbogengleichdick ebenfalls vorgesehen, dass die Aussparung im Wesentlichen rechteckig ist. Des Weiteren sind die Abmessungen der Aussparung derart, dass bei Drehung des Dreibogengleichdicks das Dreibogengleichdick in der Aussparung der Kulisse des Dreibogengleichdick in Schubrichtung an zwei einander gegenüberliegenden gerade verlaufenden Wandungen der Aussparung anliegt. Die Verwendung eines Mehrbogengleichdicks und hier insbesondere eines Dreibogengleichdicks sorgt für die Linearität zwischen rotatorischem und translatorischem Bewegungsanteil.

Nach einem weiteren besonders bevorzugten Merkmal der Erfindung ist in Bezug auf beide Ausführungsformen vorgesehen, dass der Dom im Bereich der Öffnung des ersten beweglichen Bauteils eine Einrichtung zum Verdrehen des Domes aufweist, z. B. ein Ansatz für einen Maulschlüssel. Um den Maulschlüssel an beiden Domen gesondert ansetzen zu können, überragt der Dom des ersten unteren scheibenförmigen Führungsgliedes den Dom des zweiten darüber befindlichen scheibenförmigen Führungsgliedes. Auch ist vorgesehen, dass beide Dome über die Öffnung des ersten beweglichen Bauteiles überstehen. Zum besseren Erfassen der Dome können Stellelemente z. B. Stellmuttern vorgesehen sein. Die Stellelemente sind übereinander angeordnet und stehen jeweils für sich mit dem entsprechenden Dom in formschlüssiger Verbindung.

Nach einem weiteren bevorzugten Merkmal der Erfindung sind beide Dome durch einen entsprechenden Schraubbolzen relativ zueinander fixierbar. Die gesamte Exzentereinrichtung einschließlich der Stellelemente ist auf einen Schraubbolzen aufgereiht, der an dem festen Bauteil in einem Gewindeloch oder ein ähnliches Teil eingedreht ist. Das heißt, dass der Schraubbolzen bei dem Vorgang der Justierung eine feststehende Achse bildet, nach der Justierung der Bauteile allerdings gegen ein Gewinde z. B. eine Mutter angezogen wird und so die Bauteile in der Endstellung dauerhaft fixiert. Hierbei fixiert der Schraubbolzen über die Stellelemente die Dome. D. h. der Kraftfluss zu den Domen erfolgt über die Stellelemente. Mithin können den Stellelementen zwei Aufgaben zu kommen, nämlich zum einen die Verdrehung der Dome und zum anderen deren Fixierung bei Anziehen des Schraubbolzens. Bei der Montage ist hierbei vorteilhaft, dass das Einstellen bzw. die Justierung der Vorrichtung und das Verklemmen über den Schraubbolzen von der gleichen Seite her erfolgen kann.

Vorteilhaft ist des Weiteren vorgesehen, eine der Kulissen entweder mit dem beweglichen oder mit dem festen Bauteil in eine starre Verbindung zu bringen. Hierzu kann die Kulisse Fixiermittel aufweisen, beispielsweise in Form von zwei beabstandet zueinander angeordneten Stiften, die in entsprechenden Ausnehmungen des festen oder beweglichen Bauteils hineinragen. Ist in diesem Zusammenhang die untere Kulisse beispielsweise durch die Stifte mit dem feststehenden Bauteil verbunden, dann ist die Öffnung in dem beweglichen ersten Bauteil kreisrund ausgebildet und entspricht in ihrem Durchmesser in etwa dem des Domes des zweiten oberen Exzentergliedes. Im zweiten feststehenden Bauteil ist dann eine Bohrung mit einer räumlichen Erstreckung vorgesehen, die eine Exzenterbewegung der scheibenartigen Führungsglieder in dem Bauteil ermöglicht. Ist hingegen die obere Kulisse alternativ beispielsweise durch zwei beabstandet zueinander angeordnete Stifte an dem ersten beweglichen Bauteil befestigt, dann ist die Öffnung für den Durchtritt der Dome derart ausgebildet, dass die Dome sich hierin entsprechend der Exzentrizität der scheibenartigen Führungsglieder bewegen können. Die Bohrung in dem feststehenden Bauteil kann dann in etwa dem Durchmesser der Schraube entsprechen, da, wie bereits ausgeführt, die Exzenterbewegung durch die Öffnung im oberen beweglichen Bauteil ermöglicht wird.

Anhand der Zeichnungen wird die Erfindung beispielhaft näher erläutert.
- Fig. 1: zeigt die Vorrichtung zur Justierung der Lage eines ersten beweglichen Bauteils relativ zu einem zweiten feststehenden Bauteil unter Verwendung von Dreibogengleichdicken in einer Explosionszeichnung;
- Fig. 2: zeigt eine Darstellung der Vorrichtung gemäß Fig. 1, wobei jedoch als scheibenförmige Führungsglieder kreisrunde Scheiben eingesetzt werden;

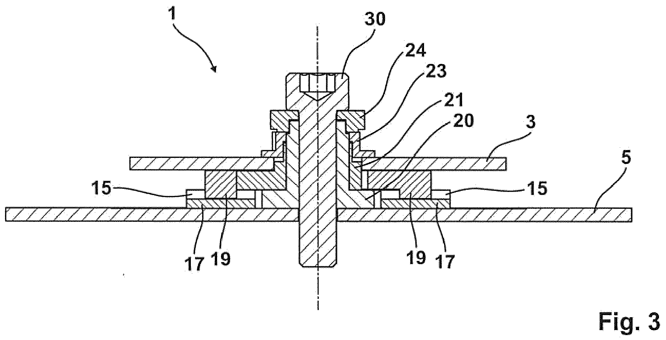

- Fig. 3: zeigt einen Schnitt durch die Darstellung gemäß Fig. 1.

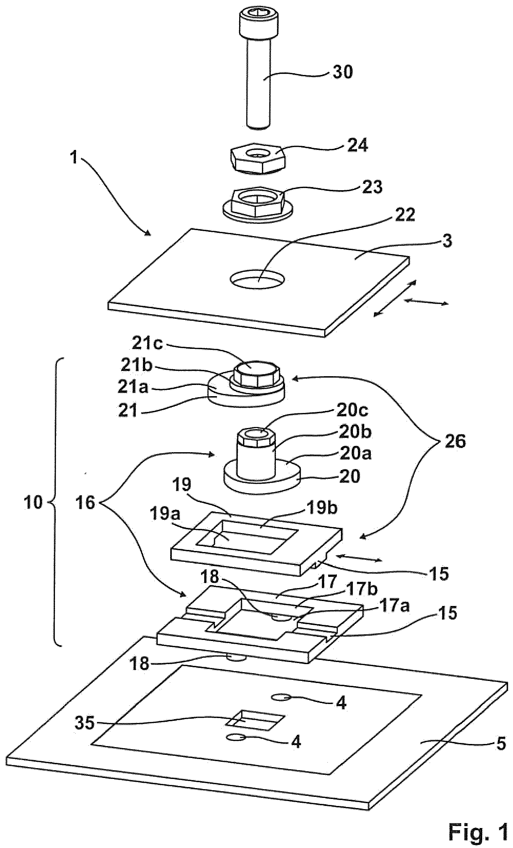

Die insgesamt mit 1 bezeichnete Vorrichtung zur Justierung der Lage eines ersten beweglichen Bauteils 3 relativ zu einem zweiten feststehenden Bauteil 5 umfasst primär die insgesamt mit 10 bezeichnete Exzentereinrichtung. Die Exzentereinrichtung befindet sich zwischen dem ersten beweglichen Bauteil 3 und dem zweiten feststehenden Bauteil 5. Die Exzentereinrichtung umfasst zwei Exzentereinheiten, nämlich die erste untere Exzentereinheit 16 und die zweite obere Exzentereinheit 26. Die erste untere Exzentereinheit 16 umfasst die erste untere Kulisse 17, die durch zwei benachbart zueinander angeordnete Führungsstifte 18 durch Bohrungen 4 auf dem zweiten feststehenden Bauteil 5 festgelegt ist. Die erste untere Kulisse 17 nimmt die zweite obere Kulisse 19 parallel zur z. B. Längsachse der Kulissen verschieblich auf, wobei zur Verbindung der beiden Kulissen 17, 19 eine mit 15 bezeichnete Nut- und Federverbindung vorgesehen ist, wie sich dies unmittelbar in Anschauung von Fig. 1 ergibt, die in Form einer Schwalbenschwanzführung ausgebildet sein kann. Sowohl die erste untere Kulisse 17, als auch die zweite obere Kulisse 19 besitzen jeweils eine Aussparung 17a, 19a. Die Aussparung ist hierbei nach Art eines Rechteckes getroffen. Hierbei verlaufen mindestens zwei Seitenwandungen 17b, 19b parallel zueinander und zwar zwei ebene Seitenwandungen, die in Schubrichtung liegen.

Eine jede der Aussparungen 17a, 19a nimmt das scheibenartige Führungsglied 20a, 21a als Teil des ersten unteren und zweiten oberen Exzentergliedes 20, 21 auf, wobei ein jedes der beiden scheibenartigen Führungsglieder 20, 21 als Scheibe ausgebildet ist, die nach Art eines Dreibogengleichdickes ausgebildet ist. Exzentrisch auf dem nach Art eines Dreibogengleichdickes ausgebildeten scheibenartigen Führungsgliedes 20a, 21a ist jeweils ein erster unterer und ein zweiter oberer Dom 20b, 21b angeordnet, wobei der Durchmesser des Domes 20b derart ist, dass dieser den Dom 21b des zweiten oberen Exzentergliedes durchragt, dass heißt drehbar in dem Dom des zweiten oberen Exzentergliedes 21 gelagert ist.

Das erste bewegliche Bauteil 3 besitzt eine Öffnung 22, deren Durchmesser in etwa dem des Domes 21b des zweiten oberen Exzentergliedes 21 entspricht. Die beiden Dome 20b, 21b durchragen die Öffnung 22, und sie besitzen am oberen Ende einen Ansatz 20c, 21c für z. B. einen Maulschlüssel, um die Justierung vornehmen zu können. Oberhalb des ersten beweglichen Bauteils 3 befinden sich zwei Stellmuttern als Stellelemente, nämlich die Stellmutter 23 und die Stellmutter 24, wobei die Stellmutter 23 den Dom 21b des zweiten oberen Exzentergliedes 21 erfasst, und die Stellmutter 24 den Dom 20b des ersten unteren Exzentergliedes 20. Die Verbindung zwischen den Stellmuttern 23, 24 und den Ansätzen 20c, 21c erfolgt formschlüssig. Durch die Stellmuttern erfolgt die Justierung der Dome bzw. der scheibenartigen Führungsglieder 20a, 21a; 120a, 121a.

Gehalten wird die ganze Vorrichtung 1 durch den Schraubbolzen oder die Schraube 30, die durch eine entsprechende Bohrung 35 des zweiten feststehenden Bauteils 5 hindurchragt. Durch Anziehen der Schraube 30 gegen eine Gewindebohrung in einem darunter befindlichen Bauteil, z. B. dem Gehäuse eines Scheinwerfers eines Fahrzeugs, erfolgt die endgültige Fixierung der Vorrichtung. Der Schraubbolzen wirkt hierbei auf die beiden Stellmuttern 23, 24 und verklemmt oder anders ausgedrückt verspannt sie. Die Bohrung 35 weist allerdings Abmessungen auf, die eine Exzenterbewegung des scheibenartigen Führungsgliedes ermöglichen. Die entsprechende Öffnung 22 im ersten beweglichen Bauteil 3, entspricht dem Durchmesser des Ansatzes des zweiten oberen Doms 21c.

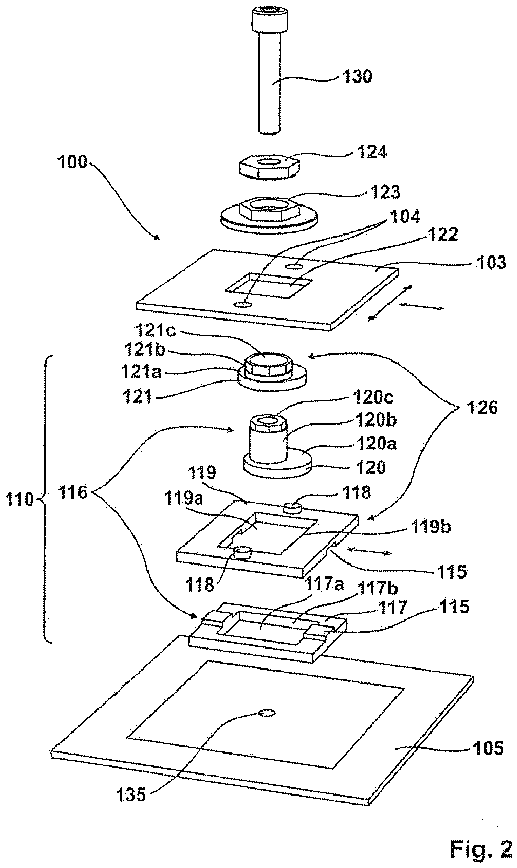

Betrachtet man nunmehr die Darstellung gemäß Fig. 2, so ergibt sich für die Vorrichtung 100 zur Justierung der Lage eines ersten beweglichen Bauteils 103 relativ zu einem zweiten feststehenden Bauteil 105 zwischen den Bauteilen 103 und 105 eine insgesamt mit 110 bezeichnete Exzentereinrichtung, die eine erste untere Exzentereinheit 116 und eine zweite obere Exzentereinheit 126 umfasst. Die erste untere Exzentereinheit 116 umfasst die erste untere Kulisse 117 zusammen mit dem ersten unteren Exzenterglied 120. Die Kulisse 117 weist als Aussparung 117a ein Rechteck auf, das der Aufnahme des scheibenartigen Führungsgliedes 120a des ersten unteren Exzentergliedes 120 dient. Das scheibenartige Führungsglied 120a ist im Einzelnen als kreisrunde Scheibe ausgebildet, auf der exzentrisch der Dom 120b angeordnet ist.

Die Kulisse 119 der zweiten oberen Exzentereinheit 126 zeigt ebenfalls als Aussparung 119a ein Rechteck, wobei das Rechteck der Kulisse 119 gegenüber dem Rechteck der Kulisse 117 allerdings um 90° verschwenkt ist. Die Aussparung 119a in der Kulisse 119 nimmt das zweite obere Exzenterglied 121 auf, wobei das zweite obere Exzenterglied 121 das scheibenartige Führungsglied 121a in Form einer kreisrunden Scheibe aufweist.

Exzentrisch auf dem als kreisrunde Scheibe ausgebildeten scheibenförmigen Führungsglied 121 angeordnet ist der zweite obere Dom 121b, wobei der erste untere Dom 120b des ersten unteren Exzentergliedes 120 durch den Dom 121b hindurchragt. Beide Dome 120b, 121b durchragen das erste bewegliche Bauteil 103, das hierzu eine rechteckige Öffnung 122 mit abgerundeten Enden aufweist, deren Abmessung so ist, dass die Exzenterbewegung des Doms 121b ermöglicht wird. Parallel dazu ist die Bohrung 135 im Durchmesser so groß wie die Schraube im zweiten feststehenden Bauteil.

Zur axialen Verschieblichkeit des ersten unteren Exzentergliedes 120 sowie auch des zweiten oberen Exzentergliedes 121 durch die axiale Beweglichkeit der Kulisse 119 auf der Kulisse 117 ist vorgesehen, dass die Kulisse 117 durch eine Nut- und Federverbindung 115 beispielsweise in Form einer Schwalbenschwanzführung mit der Kulisse 117 in Verbindung steht. Die obere Kulisse 119 weist hierbei zwei beabstandet zueinander angeordnete Führungsstifte 118 auf, die in entsprechende Ausnehmungen 104 in den ersten beweglichen Bauteil 103 hineinragen. Es wurde bereits darauf hingewiesen, dass die Öffnung 122 von den beiden Domen 120b und 121b durchragt wird. Die beiden Dome 120b, 121b weisen jeweils an ihrem oberen Ende einen Ansatz 120c, 121c zum Ansetzen eines Maulschlüssels auf, wodurch bei Verdrehung der Dome die entsprechende rotatorische Bewegung der scheibenförmigen Führungsglieder 120a, 121a in eine translatorische Bewegung in die X- und Y-Richtung umgesetzt wird.

Das heißt, hierdurch kann in einer bestimmten Ebene jeder Punkt der Ebene angesteuert werden.

Des Weiteren sind auch hier Stellmuttern 123 und 124 vorgesehen, wobei die Stellmutter 123 den Dom 120b erfasst, wobei hingegen die Stellmutter 124 den Dom 121b des zweiten oberen Exzentergliedes 121 ergreift.

Gehalten wird die gesamte Vorrichtung 100 auf dem zweiten feststehenden Bauteil 105 durch die mit 130 bezeichnete Schraube; die Schraube wird durch die Bohrung 135 in dem feststehenden Bauteil 105, z. B. durch die Ausbildung der Bohrung als Gewindebohrung, gehalten. Grundsätzlich gilt, dass die Bohrung im Durchmesser dem der Schraube entspricht, die die Bohrung den Lagerpunkt bilden. Das heißt, dass nach Justierung der Bauteile relativ zueinander die Schraube 130 angezogen wird, um dann die Bauteile in ihrer Lage endgültig zu fixieren. Hieraus wird deutlich, dass die Vorrichtung zur Justierung nach der Justierung und Verklemmung verloren ist, da sie der dauerhaften Fixierung der Bauteile relativ zueinander dient.

Es wird darauf hingewiesen, dass beide Ausführungsformen große Ähnlichkeiten aufweisen. Das heißt, das Prinzip ist im Wesentlichen gleich. Es besteht darin, durch eine rotatorische Bewegung der Exzenterglieder zweier Exzentereinheiten eine translatorische Bewegung zu erzeugen und zwar in zwei Raumrichtungen einer Ebene (X- und Y-Richtung), um hierdurch jeden Punkt der Ebene, der bedingt durch die Exzentrizität der scheibenartigen Führungsglieder in Kombination mit den Aussparungen möglich ist, in der jeweiligen Kulisse gesondert anfahren zu können. Hierbei bestimmt die Exzentrizität den Hub.

### Bezugszeichenliste:

- 1: Vorrichtung
- 3: erstes bewegliches Bauteil
- 4: Bohrungen für Führungsstifte
- 5: zweites feststehendes Bauteil
- 10: Exzentereinrichtung
- 15: Nut- und Federverbindung zwischen den beiden Kulissen
- 16: erste untere Exzentereinheit
- 17: erste untere Kulisse
- 17a: Aussparung
- 17b: Seitenwandung
- 18: Führungsstifte (Kulisse)
- 19: zweite obere Kulisse
- 19a: Aussparung
- 19b: Seitenwandung
- 20: erstes unteres Exzenterglied
- 20a: scheibenartiges Führungsglied des ersten unteren Exzentergliedes
- 20b: erster unterer Dom
- 20c: Ansatz des ersten unteren Doms
- 21: zweites oberes Exzenterglied
- 21a: scheibenartiges Führungsglied des zweiten oberen Exzentergliedes
- 21b: zweiter oberer Dom
- 21c: Ansatz des zweiten oberen Doms
- 22: Öffnung im ersten beweglichen Bauteil
- 23: Stellmutter
- 24: Stellmutter
- 26: zweite obere Exzentereinheit
- 30: Schraube
- 35: Bohrung
- 100: Vorrichtung
- 103: erstes bewegliches Bauteil
- 104: Bohrungen für Führungsstifte
- 105: zweites feststehendes Bauteil
- 110: Exzentereinrichtung
- 115: Nut- und Federverbindung zwischen den beiden Kulissen
- 116: erste untere Exzentereinheit
- 117: erste untere Kulisse
- 117a: Aussparung
- 117b: Seitenwandung
- 118: Führungsstifte (Kulisse)
- 119: zweite obere Kulisse
- 119a: Aussparung
- 119b: Seitenwandung
- 120: erstes unteres Exzenterglied
- 120a: scheibenförmiges Führungsglied des ersten unteren Exzentergliedes
- 120b: erster unterer Dom
- 120c: Ansatz des ersten unteren Doms
- 121: zweites oberes Exzenterglied
- 121a: scheibenförmiges Führungsglied des ersten unteren Exzentergliedes
- 121b: zweiter oberer Dom
- 121c: Ansatz des zweiten oberen Doms
- 122: Öffnung im ersten beweglichen Bauteil
- 123: Stellmutter
- 124: Stellmutter
- 126: zweite obere Exzentereinheit
- 130: Schraube
- 135: Bohrung

## Patentansprüche

1. Justierungsvorrichtung (1, 100) zur Justierung der Lage eines ersten beweglichen Bauteils (3, 103) relativ zu einem zweiten feststehenden Bauteil (5, 105),
mit einer zwischen den beiden Bauteilen anordenbaren Exzentereinrichtung (10, 110), wobei durch die Exzentereinrichtung das erste bewegliche Bauteil in mindestens einer Raumachse linear relativ zu dem zweiten feststehenden Bauteil verschieblich ist,
wobei die Exzentereinrichtung (10, 110) mindestens zwei übereinander angeordnete Exzentereinheiten (16, 26; 116, 126) umfasst, die miteinander in Verbindung stehen,
**dadurch gekennzeichnet,**
**dass** die Exzentereinheiten (16, 26; 116, 126) in ihrer Bewegung entkoppelt sind, wobei die Bewegung des beweglichen Bauteils in X- und Y-Richtung jeweils gesondert erfolgt.

2. Justierungsvorrichtung nach Anspruch 1,
**dadurch gekennzeichnet,**
**dass** jede Exzentereinheit (16, 26; 116, 126) mindestens eine Kulisse (17, 19; 117, 119) zur drehbaren Aufnahme mindestens eines Exzentergliedes (20, 21; 120, 121) aufweist.

3. Justierungsvorrichtung nach Anspruch 2,
**dadurch gekennzeichnet,**
**dass** die Kulisse (17, 19; 117, 119) zur Aufnahme des Exzentergliedes (20, 21; 120, 121) eine Aussparung (17a, 19a; 117a, 119a) aufweist.

4. Justierungsvorrichtung nach Anspruch 3,
**dadurch gekennzeichnet,**
**dass** die Aussparung (17a, 19a; 117a, 119a) mindestens zwei im Wesentlichen parallel zueinander verlaufende Seitenwandungen (17b, 19b; 117b, 119b) aufweist.

5. Justierungsvorrichtung nach einem der Ansprüche 2 bis 4,
**dadurch gekennzeichnet,**
**dass** die beiden Kulissen (17, 19; 117, 119) in einer Raumachse relativ zueinander verschieblich miteinander in Verbindung stehen.

6. Justierungsvorrichtung nach Anspruch 3,
**dadurch gekennzeichnet,**
**dass** das Exzenterglied (20, 21; 120, 121) ein scheibenartiges Führungsglied (20a, 21a; 120a, 121a) zur Aufnahme durch die Aussparung (17a, 19a; 117a, 119a) der Kulisse aufweist.

7. Justierungsvorrichtung nach Anspruch 6,
**dadurch gekennzeichnet,**
**dass** jedes scheibenartige Führungsglied (20, 21a; 120a, 121a) einen exzentrisch auf dem scheibenartigen Führungsglied (20a, 21a; 120a, 121a) angeordneten Dom (20b, 21b; 120b, 121b) umfasst.

8. Justierungsvorrichtung nach Anspruch 7,
**dadurch gekennzeichnet,**
**dass** das in der Aussparung (17a, 117a) der ersten unteren Kulisse (17, 117) geführte erste scheibenartige Führungsglied (20a, 120a) den ersten Dom (20b, 120b) aufweist, wobei das in der Aussparung (19a, 119a) der zweiten oberen Kulisse geführte zweite scheibenartige Führungsglied (21a, 121a) einen zweiten Dom (21b, 121b) aufweist, wobei der erste Dom den zweiten Dom durchragt, und die beiden Dome relativ zueinander verdrehbar ineinander gelagert sind, wobei die beiden Dome durch eine entsprechende Öffnung (22, 122) mit dem ersten beweglichen Bauteil (3, 103) in Verbindung stehen.

9. Justierungsvorrichtung nach einem der Ansprüche 6 bis 8,
**dadurch gekennzeichnet,**
**dass** das scheibenartige Führungsglied (120a, 121a) nach Art einer kreisrunden Scheibe ausgebildet ist, wobei der Dom (120b, 121b) exzentrisch auf der kreisrunden Scheibe angeordnet ist.

10. Justierungsvorrichtung nach einem der Ansprüche 6 bis 8,
**dadurch gekennzeichnet,**
**dass** das scheibenartige Führungsglied (20a, 21a) als Mehrbogengleichdick ausgebildet ist, wobei der Dom (20b, 21b) exzentrisch auf dem Mehrbogengleichdick angeordnet ist.

11. Justierungsvorrichtung nach Anspruch 6,
**dadurch gekennzeichnet,**
**dass** die im Wesentlichen rechteckige Aussparung in der jeweiligen Kulisse in ihren Abmessungen im Bezug auf den Umfang derart ist, dass bei Drehung des Führungsgliedes in der Aussparung das Führungsglied in Schubrichtung immer an zwei gegenüberliegenden Wandungen der Aussparung anliegt.

12. Justierungsvorrichtung nach Anspruch 8,
**dadurch gekennzeichnet,**
**dass** der Dom in der Öffnung des ersten beweglichen Bauteils eine Einrichtung (20c, 21c; 120c, 121c) zum Verdrehen des Doms aufweist.

13. Justierungsvorrichtung nach einem der Ansprüche 7 oder 8,
**dadurch gekennzeichnet,**
**dass** die Dome (20b, 21b; 120b, 121b) in ihrer jeweiligen Lage fixierbar sind.

14. Justierungsvorrichtung nach einem der voranstehenden Ansprüche 5 bis 13,
**dadurch gekennzeichnet,**
**dass** bei zwei Kulissen eine der beiden Kulissen (17, 19; 117, 119) ortsfest mit dem ersten beweglichen (3, 103) oder dem zweiten feststehenden Bauteil (5, 105) verbindbar ist.

15. Justierungsvorrichtung nach Anspruch 12,
**dadurch gekennzeichnet,**
**dass** auf die Einrichtung (20c, 21c; 120c, 121c) zum Verdrehen des jeweiligen Doms ein Stellelement formschlüssig aufsetzbar ist.

16. Justierungsvorrichtung nach Anspruch 15,
**dadurch gekennzeichnet,**
**dass** das Stellelement als Stellmutter (23, 24; 123, 124) ausgebildet ist.

## Claims

1. An adjustment device (1, 100) for adjusting the position of a first movable component (3, 103) relative to a second stationary component (5, 105),
with an eccentric device (10, 110) arrangeable between both components, wherein the first movable component is linearly displaceable, along at least one spatial axis, relative to the second stationary component, by the eccentric device,
wherein the eccentric device (10, 110) includes at least two eccentric units (16, 26; 116, 126) disposed above one another, which are connected with each other,
**characterized in that**
the eccentric units (16, 26; 116, 126) are uncoupled with regard to their movement, wherein the movements of the movable component, respectively in the X and Y directions, take place separately.

2. The adjustment device according to claim 1,
**characterized in that**
each eccentric unit (16, 26; 116, 126) comprises at least one slotted piece (17, 19; 117, 119) for receiving at least one eccentric element (20, 21; 120, 121) in a rotatable manner.

3. The adjustment device according to claim 2,
**characterized in that**
the slotted piece (17, 19; 117, 119) comprises a recess (17a, 19a; 117a, 119a) for receiving the eccentric element (20, 21; 120, 121).

4. The adjustment device according to claim 3,
**characterized in that**
the recess (17a, 19a; 117a, 119a) comprises at least two side walls (17b, 19b; 117b, 119b) extending substantially parallel to each other.

5. The adjustment device according to one of the claims 2 to 4,
**characterized in that**
the two slotted pieces (17, 19; 117, 119) are connected to each other in such a manner that they are displaceable relative to each other along a spatial axis.

6. The adjustment device according to claim 3,
**characterized in that**
the eccentric element (20, 21; 120, 121) comprises a disc-type guide element (20a, 21a; 120a, 121a) to be received in the recess (17a, 19a; 117a, 119a) of the slotted piece.

7. The adjustment device according to claim 6,
**characterized in that**
each disc-type guide element (20a, 21a; 120a, 121a) includes a dome (20b, 21b; 120b, 121b) eccentrically disposed on the disc-type guide element (20a, 21a; 120a, 121a).

8. The adjustment device according to claim 7,
**characterized in that**
the first disc-type guide element (20a, 120a) guided in the recess (17a, 117a) of the first bottom slotted piece (17, 117) comprises the first dome (20b, 120b), wherein the second disc-type guide element (21a, 121a) guided in the recess (19a, 119a) of the second upper slotted piece comprises a second dome (21b, 121b), wherein the first dome sticks out through the second dome and the two domes are mounted inside one another so that they are rotatable relative to each other, wherein the two domes are connected with the first movable component (3, 103) through a corresponding opening (22, 122).

9. The adjustment device according to one of the claims 6 to 8,
**characterized in that**
the disc-type guide element (120a, 121a) is designed in the manner of a circular disc, wherein the dome (120b, 121b) is disposed eccentrically on the circular disc.

10. The adjustment device according to one of the claims 6 to 8,
**characterized in that**
the disc-type guide element (20a, 21a) is designed as a constant-width curve with multiple arcs, wherein the dome (20b, 21b) is eccentrically disposed on the constant-width curve with multiple arcs.

11. The adjustment device according to claim 6,
**characterized in that**
the dimensions of the substantially rectangular recess in the respective slotted piece with regard to the circumference are such that when the guide element is rotated in the recess, the guide element always rests on two opposed walls of the recess in the direction of thrust.

12. The adjustment device according to claim 8,
**characterized in that**
the dome comprises a device (20c, 21c; 120c, 121c) for rotating the dome, in the opening of the first movable component.

13. The adjustment device according to one of the claims 7 or 8,
**characterized in that**
the domes (20b, 21b; 120b, 121b) can be fixed in their respective position.

14. The adjustment device according to one of the afore-mentioned claims 5 to 13,
**characterized in that**
with two slotted pieces, one of the two slotted pieces (17, 19; 117, 119) can be connected in a fixed manner with the first movable (3, 103) or the second stationary component (5, 105).

15. The adjustment device according to claim 12,
**characterized in that**
an adjustment element can be fitted in a form-fitting manner onto the device (20c, 21c; 120c, 121c) for rotating the respective dome.

16. The adjustment device according to claim 15,
**characterized in that**
the adjustment element is designed as an adjusting nut (23, 24; 123, 124).

## Revendications

1. Dispositif d'ajustement (1, 100) pour l'ajustement d'une position d'un premier composant mobile (3, 103) par rapport à un second composant fixe (5, 105),
avec un dispositif excentrique (10, 110) pouvant être agencé entre les deux composants, le premier composant mobile étant déplaçable linéairement selon au moins un axe de l'espace par rapport au second composant fixe au moyen du dispositif excentrique,
le dispositif excentrique (10, 110) comportant au moins deux unités excentriques (16, 26 ; 116, 126) disposées l'une par-dessus l'autre et reliées entre elles,
**caractérisé en ce que**
les unités excentriques (16, 26 ; 116, 126) sont découplées en termes de mouvement, le mouvement du composant mobile dans les directions X et Y se produisant respectivement séparément.

2. Dispositif d'ajustement selon la revendication 1,
**caractérisé en ce que**
chaque unité excentrique (16, 26 ; 116, 126) comporte au moins une coulisse (17, 19 ; 117, 119) destinée à recevoir de manière rotative au moins un élément excentrique (20, 21 ; 120, 121).

3. Dispositif d'ajustement selon la revendication 2,
**caractérisé en ce que**
la coulisse (17, 19 ; 117, 119) comporte un évidement (17a, 19a ; 117a, 119a) destiné à recevoir l'élément excentrique (20, 21 ; 120, 121).

4. Dispositif d'ajustement selon la revendication 3,
**caractérisé en ce que**
l'évidement (17a, 19a ; 117a, 119a) comporte au moins deux parois latérales (17b, 19b; 117b, 119b) s'étendant essentiellement parallèlement l'une à l'autre.

5. Dispositif d'ajustement selon l'une des revendications 2 à 4,
**caractérisé en ce que**
les deux coulisses (17, 19 ; 117, 119) sont reliées l'une à l'autre de manière à être déplaçables l'une par rapport à l'autre selon un axe dans l'espace.

6. Dispositif d'ajustement selon la revendication 3,
**caractérisé en ce que**
l'élément excentrique (20, 21 ; 120, 121) comporte un élément de guidage (20a, 21a ; 120a, 121a) en forme de disque destiné à être reçu dans l'évidement (17a, 19a ; 117a, 119a) de la coulisse.

7. Dispositif d'ajustement selon la revendication 6,
**caractérisé en ce que**
chaque élément de guidage en forme de disque (20a, 21a; 120a, 121a) comprend un dôme (20b, 21b; 120b, 121b) disposé de manière excentrique sur l'élément de guidage en forme de disque (20a, 21a ; 120a, 121a).

8. Dispositif d'ajustement selon la revendication 7,
**caractérisé en ce que**
le premier élément de guidage en forme de disque (20a, 120a) guidé dans l'évidement (17a, 117a) de la première coulisse inférieure (17, 117) comporte un premier dôme (20b, 120b), le second élément de guidage en forme de disque (21a, 121a) guidé dans l'évidement (19a, 119a) de la seconde coulisse inférieure comportant un second dôme (21b, 121b), le premier dôme traversant le second dôme, et les deux dômes étant montés l'un dans l'autre de manière à pouvoir tourner l'un par rapport à l'autre, les deux dômes étant reliés avec le premier composant mobile (3, 103) à travers une ouverture correspondante (22, 122).

9. Dispositif d'ajustement selon l'une des revendications 6 à 8,
**caractérisé en ce que**
l'élément de guidage en forme de disque (120a, 121a) est réalisé sous la forme d'un disque circulaire, le dôme (120b, 121b) étant disposé de manière excentrique sur le disque circulaire.

10. Dispositif d'ajustement selon l'une des revendications 6 à 8,
**caractérisé en ce que**
l'élément de guidage en forme de disque (20a, 21a) prend la forme d'une courbe de largeur constante à plusieurs arcs, le dôme (20b, 21b) étant disposé de manière excentrique sur la courbe de largeur constante à plusieurs arcs.

11. Dispositif d'ajustement selon la revendication 6,
**caractérisé en ce que**
les dimensions de la circonférence de l'évidement essentiellement rectangulaire dans la coulisse respective sont telles qu'en cas de rotation de l'élément de guidage dans l'évidement, l'élément de guidage repose toujours sur deux parois opposées de l'évidement dans la direction de poussée.

12. Dispositif d'ajustement selon la revendication 8,
**caractérisé en ce que**
le dôme dans l'ouverture du premier composant mobile comporte un dispositif (20c, 21c ; 120c, 121c) pour faire tourner le dôme.

13. Dispositif d'ajustement selon l'une des revendications 7 ou 8,
**caractérisé en ce que**
les dômes (20b, 21b; 120b, 121b) peuvent être fixés dans leur position respective.

14. Dispositif d'ajustement selon l'une des revendications précédentes 5 à 13,
**caractérisé en ce que**
en présence de deux coulisses, l'une des deux coulisses (17, 19 ; 117, 119) peut être reliée de manière fixe au premier composant mobile (3, 103) ou au second composant fixe (5, 105).

15. Dispositif d'ajustement selon la revendication 12,
**caractérisé en ce que**
un élément de réglage peut être emboîté par liaison de forme sur le dispositif (20c, 21c ; 120c, 121c) pour faire tourner le dôme respectif.

16. Dispositif d'ajustement selon la revendication 15,
**caractérisé en ce que**
l'élément de réglage prend la forme d'un écrou de réglage (23, 24 ; 123, 124).
